(19) Europäisches Patentamt / European Patent Office / Office européen des brevets

(11) **EP 4 165 242 B1**

(12) **EUROPEAN PATENT SPECIFICATION**

(45) Date of publication and mention
of the grant of the patent:
**31.07.2024 Bulletin 2024/31**

(21) Application number: **21731958.1**

(22) Date of filing: **07.06.2021**

(51) International Patent Classification (IPC):
**D07B 1/06** $^{(2006.01)}$

(52) Cooperative Patent Classification (CPC):
(C-Sets available)
**D07B 1/0666; B21C 1/003; B21C 3/025;
B21C 37/042; B60C 9/0007; C25D 5/10;
C25D 5/36; C25D 5/50; C25D 7/0607;**
B60C 2009/0014; D07B 1/066; D07B 2205/305;
D07B 2205/3057; D07B 2205/3089;
D07B 2401/204; (Cont.)

(86) International application number:
**PCT/EP2021/065134**

(87) International publication number:
**WO 2021/249922 (16.12.2021 Gazette 2021/50)**

(54) **BRASS COATED STEEL CORD WITH INCREASED IRON CONTENT AT THE SURFACE**

MESSINGBESCHICHTETES STAHLSEIL MIT ERHÖHTEM EISENGEHALT AN DER OBERFLÄCHE

CÂBLE D'ACIER REVÊTU DE LAITON AYANT UNE TENEUR ACCRUE EN FER À LA SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2020 PCT/CN2020/095516**

(43) Date of publication of application:
**19.04.2023 Bulletin 2023/16**

(73) Proprietor: **NV Bekaert SA
8550 Zwevegem (BE)**

(72) Inventors:
• **XIA, Degui
Jiangyin, Jiangsu Province 214434 (CN)**
• **WANG, Baoxing
Jiangyin, Jiangsu Province 214434 (CN)**

(74) Representative: **Seynhaeve, Geert Filiep
NV Bekaert SA
IPD - PC6030
Bekaertstraat 2
8550 Zwevegem (BE)**

(56) References cited:
**EP-A2- 1 004 689     WO-A1-2016/143946
WO-A1-91/12359     JP-A- 2018 119 189
US-A- 4 704 337     US-A- 4 859 289**

(52) Cooperative Patent Classification (CPC): (Cont.)
D07B 2501/2046; D07B 2501/2053

C-Sets
D07B 2205/305, D07B 2801/10;
D07B 2205/3057, D07B 2801/10;
D07B 2205/3089, D07B 2801/18

## Description

## Technical Field

The invention relates to a brass coated steel cord used for the reinforcement of rubber products such as tires, hoses, conveyor belts and similar products, hereinafter grouped under the name 'rubber articles'.

## Background Art

The remarkable composite of vulcanised rubber wherein brass coated steel cords provide strength and stiffness to the resilient and tuff vulcanised rubber is an exceptional one. This composite is key to the performance of the rubber articles that are all used in harsh and extreme circumstances such as tires.

In order for the composite to be durable and lasting over time it is of the utmost importance that the adhesion between the low modulus vulcanised rubber with the high modulus steel cord is high from the start and remains good over the entire usable life of the rubber article.

When vulcanising brass coated steel cords in rubbers with a sulphur based vulcanisation system, a remarkable reaction occurs between the copper in the brass and the sulphur in the rubber as $Cu_{(2-x)}S$ - wherein 'x' is about 0.2 - grows dendritically, like a tree, into the rubber. The 'adhesion' layer that forms is less than 250 nm or even less than 100 nm thick. This provides an initially strong bond. Initially the main oxide at the surface of the brass layer is zinc oxide. This zinc oxide slows down the reaction of copper with sulphur donating species during vulcanisation. Indeed, growth of stoichiometric $Cu_2S$ should be prevented as this results in brittle crystals yielding lower initial adhesion. After vulcanisation, some zinc sulphide is typically formed, coinciding with the $Cu_{(2-x)}S$, while the zinc oxide layer has grown as an intermediate layer between sulphide and remaining metallic brass.

On the other hand during prolonged use of the rubber article, in particular when the circumstances are hot and humid, this adhesion layer deteriorates and the bond becomes less strong. One of the main mechanisms in this deterioration is 'dezincification' of the brass by the diffusion of zinc ions ($Zn^{2+}$) out of the brass layer towards the adhesion layer there forming oxides and hydroxides of zinc resulting in a weakened adhesion bond.

In order to overcome this problem, cobalt based organic salts such as e.g. cobalt naphthenate, cobalt stearates or cobalt boron decanoate complexes are added to the skim compound in addition to other additives such as carbon black, sulphur, accelerators, oils, antioxidants, activators, etc... The skim compound is a dedicated rubber mixture that is used to encapsulate the steel cords. These cobalt organic salts (1) suppress the formation of less bonding zinc sulfide (ZnS) bridges between the brass and the rubber, thereby promoting the formation of the non-stoichiometric dendritic copper sulfide during bond formation and (2) suppress the diffusion mechanism of zinc ions out of the brass layer under hot and humid conditions thereby improving the adhesion retention.

However, the addition of cobalt based organic salts also has drawbacks in that they act as an oxidation catalyst for the diene rubber bonds thereby accelerating rubber aging that can ultimately lead to rubber failure in the vicinity of the steel cord. However, the main disadvantage of these cobalt based organic salts is that they are suspected to be carcinogenic and are therefore more and more subject to restricted use.

In order to avoid the use of cobalt based organic salts, it has been suggested to incorporate the cobalt in metallic form into the brass coating rather than in organic form in the rubber. See for example US 4255496 and US 4265678. Such ternary alloy layers do indeed give very good adhesion retention results in hot and humid conditions. However, they did not allow for the complete elimination of organic cobalt salts out of the rubber. Recent work of the current applicant published in WO 2011/076746, WO 2013/117248, WO 2013/117249 further provided solutions to enable the use of ternary alloy coatings also in cobalt free compounds. Although by this technology the use of cobalt in the tire is significantly reduced, there is still cobalt in the steel cord, and thus there remains the occurrence of cobalt in the production environment as well.

Other coating metals instead of cobalt such as nickel and iron have also been considered (See e.g. 'Rubber-brass bonding', Chapter 6 by W.J. van Ooij of the 'Handbook of Rubber Bonding', Rapra Technology Limited, of 2001, page 176). However, these metals are considered too slow in the case of iron, or even too passive in the case of nickel.

Nevertheless it has been suggested in US 4 446 198 to use a ternary copper-iron-zinc coating instead of a copper-cobalt-zinc coating. It is known that a certain amount of iron - originating from the steel substrate - is accessible to the rubber at the surface of the steel cord and contributes to the adhesion retention and build-up (See page 429 "Mechanism and theories of rubber adhesion to steel tire cords - an overview", W.J. van Ooij, RUBBER CHEMISTRY AND TECHNOLOGY, Volume 57, page 421-456, 1984). One way to increase the amount of iron at the surface of the steel cord is to decrease the amount of brass, thereby exposing parts of the steel substrate to the rubber. However, this has its limits in that sufficient brass must remain at the surface of the steel cord to build-up adhesion. US4704337 discloses a steel element for reinforcing rubber articles has a rubber adherable coating comprising a layer of a copper-zinc alloy containing at least 50% of copper and at least one additional separate outer film of a metal or a metal alloy selected from the group containing iron, nickel, manganese, chromium, molybdenum, vanadium, titanium, zirconium, niobium, tantalum, hafnium and tungsten, said outer film having a thickness of from 0.0005 to 0.05μm.

The inventors therefore set themselves the task to improve on the iron distribution for enabling improved adhesion retention.

**Disclosure of Invention**

The primary object of the invention is therefore to overcome the main problem that is the use of cobalt in rubber articles: firstly by eliminating cobalt in the steel cord and secondly by enabling the use of rubber compounds that are substantially free of cobalt. Another object of the invention is to provide a steel filament that has the correct distribution of iron at its surface. A further object of the invention is to provide a steel filament wherein the depth profile of the iron is chosen in function of improved adhesion retention. Another object of the invention is to provide a steel cord whereof some or all of the filaments show the preferred iron depth profile. A still further object of the invention is to provide a manufacturing process that results in the inventive steel cord.

According a first aspect of the invention a steel filament is presented with the features of the preamble of claim 1. The steel filament is comprised in a steel cord for reinforcing rubber articles as explained in the second aspect of the invention.

The steel filament has a diameter 'd' expressed in millimeter. For the purpose of this application the diameter 'd' is the diameter of an imaginary circle having the same surface area as the perpendicular cross section to the steel filament. For example the steel filament may have a round, circular cross section, the diameter 'd' being equal to the diameter of this round filament.

Alternatively the filament may show a cross section that deviates from a circle for example an ellipse, or a regular or irregular polygon, or a mixed polygon wherein straight edges and curved boundaries exist like for example an initially circular wire that has been flattened at one, two or more sides. These are all possible perpendicular cross sections of the steel filament, the only requirement being that they are convex.

The steel filament comprises a steel substrate and a coating comprising brass. For the purpose of this application the term 'brass' relates to the alloy formed by copper and zinc i.e. consists of copper and zinc. Any other element - be it metal or non-metal - that is intentionally (for example phosphorous or iron) or unintentionally (for example oxygen) - added to the coating is not considered to be part of the brass.

The coating has an average thickness of 450×d nanometer or more as determined by the total mass amount of copper and zinc in said brass. For example a wire with a diameter of 0.30 mm will have an average coating thickness of 135 nanometer or more. With 'average' is meant that the thickness is determined over its complete circumference and over a substantial length (e.g. over a length of 100 times the diameter 'd'). In other words 'average thickness' is a global measure of thickness, not a local measure.

The brass has a mass of copper of between 61 to 75 mass percent compared to the total mass of copper and zinc in the brass. For the purpose of this application mass percentage will be abbreviated as 'wt%'. More preferred is if the copper mass percentage is higher than 62 wt% or above 63 wt% or even above 64 wt%. If the copper mass percentage becomes too low there is the risk of excessive β-brass formation. β-brass is a harder phase of brass that is more difficult to deform than the more ductile α-brass that forms at higher mass percentages of copper. When the copper mass percentage is higher than 75 wt% in the brass, there is the risk that brittle copper sulphide may form. Lower copper mass percentages are therefore preferred such as lower than 73 wt% or lower than 71 wt% or even lower than 69 wt% of copper in the brass.

The amount of copper and zinc in the coating is determined by wet chemical analytical methods. These methods are well known to the skilled person. In these methods a mass of steel filament is sampled and weighed, the copper and zinc are stripped from the steel substrate by means of a stripping solution, the stripping solution is diluted to a standardised volume and the mass amount of copper and zinc is determined by means of one of the following techniques:

    a. X-ray fluorescence spectroscopy;
    b. Inductive Coupled Plasma spectroscopy;
    c. Atomic Absorption spectroscopy.

Details of such procedure can be found in BISFA, *'Internationally agreed methods for testing of steel tyre cord',* entries E11/1, E11/2 and E11/4. BISFA is the *'The International Bureau for the Standardisation of man-made fibres'.*

The mass percent of copper (Cu (wt%)) is then calculated as:

$$Cu\ (wt\%) = 100 \times \frac{mass\ of\ Cu}{mass\ of\ Cu + mass\ of\ Zn}$$

If the sum of the mass of copper and zinc per unit mass of steel cord is 'B' grams per kilogram, then the average thickness of the coating 't' expressed in nanometer of a filament with equivalent diameter 'd' can be calculated from:

$$t = 231.8 \times B \times d$$

Characteristic about the steel filament is that the coating has an unusual amount of iron at the top surface. The amount of iron at the surface is measured by means of X-Ray photo electron spectroscopy, a surface analysis technique that is generally known under the acronym 'XPS'. The technique is also referred to as 'ESCA' which stands for 'Electron Spectroscopy for Chemical Analysis'. More specifically the coating has an average iron content of 4 or more atomic percent in the first layer, this first layer extending from the surface of the filament to a depth of 3 nm below the surface. The iron content is expressed in atomic percent (at%) versus the total of iron, copper and zinc. No other elements are to be taken into account in the denominator.

In XPS electrons from the surface of the sample are emitted from the surface atoms after excitation by the photons in a focussed X-Ray beam. Out of the kinetic energy distribution of these 'photo electrons' conclusions can be drawn with regard to the composition of the surface atoms probed (and their chemical bonding state). The diameter of the substantial circular X-Ray beam is about 100 $\mu$m. The wavelength of the X-Ray photons corresponds to that of the aluminium K-alfa line. The depth of probing is just a few nanometer below the surface. The probed volume thus corresponds to a very thin, circular disc. In order to obtain a depth profile, surface atoms are sputtered away by means of an argon ion sputter beam for standardised periods of time between the X-Ray photo electron measurements. The intensity of the argon ion sputter beam is calibrated such that in 10 seconds, 1 nanometer of alfa-iron is sputtered away. For the purpose of this application this ratio of 10 seconds sputtering time per nanometer of surface layer will be maintained. Based on the kinetic energy of the photo electrons the atomic species at the surface can be identified.

While XPS analysis can easily identify various elements such as carbon, oxygen, sulphur, for the purpose of this application only the metals copper, zinc and iron are measured. As the number and energy of the photo electrons is respectively a measure for the abundance of and the atom number of the atoms at the surface it becomes possible to trace the atomic percentage of iron, indicated with '(Fe)' at various depths '$x_i$' with index 'i' (index '0' being measured before sputtering, the last measuring point indicated with 'N' at a depth '$\Delta$'):

$$(Fe)_i \ (in \ at\%) = 100 \times \frac{\#Fe}{\#Fe + \#Cu + \#Zn}$$

wherein #Fe,#Cu and #Zn are the counts for the photo electrons as filtered for the respective energies corresponding to those elements.

The so obtained depth profile of $(Fe)_i$ as function of the depth '$x_i$' must then be averaged out between the surface up to a sputtered depth '$\Delta$' of 3 nm. Preferably at least 4 measurements must be made at various depths below the surface up to a depth of 3 nm. For example at sputtering times 0, 6, 12, 18, 24 and 30 seconds the abundance of iron atoms $(Fe)_i$ can be determined, 'i' counting from 0, 1, 2, 3, 4, to 5. Preferably the measurement depths are equidistant or at least evenly spread. The average of the iron abundance is then obtained by integrating the iron depth profile by means of the trapezoidal rule and dividing by the depth '$\Delta$'.

$$\langle Fe \rangle = \frac{\sum_{i=0}^{N-1} \left( \frac{(Fe)_i + (Fe)_{i+1}}{2} \right)(x_{i+1} - x_i)}{\Delta}$$

In this way an indication is obtained of how much iron atoms are present in the disk shaped volume probed by the X-Ray beam to the mentioned depth.

Although the focused X-Ray photon beam already averages out a lot of the variation of iron on the surface due to its relative large beam size, it is best to do the measurements on four different spots on the surface of the steel filament and to use the average of the four numbers obtained as the final measure for the amount of iron at the top 3 nm layer of the coating.

The steel of the steel substrate is preferably made of plain carbon steel with a composition within following limits (all percentages are percentages by mass, abbreviated by 'wt%'):

- a carbon content ranging from 0.60wt% to 1.20wt%, e.g. 0.80wt% to 1.1wt%;
- a manganese content ranging from 0.10wt% to 1.0wt%, e.g. from 0.20wt% to 0.80wt%;
- a silicon content ranging from 0.10wt% to 1.50wt%, e.g. from 0.15wt% to 0.70wt%;

- a sulphur content below 0.03wt%, e.g. below 0.01wt%;
- a phosporus content below 0.03wt%, e.g. below 0.01wt%.

By subjecting the steel to a strain hardening operation like wire drawing filaments with a tensile strength in excess of 2500 MPa or above 3000 MPa or even higher than 3500 MPa can be obtained.

The micro-alloying of steel can help to obtain even higher tensile strength filaments. Mass percentages of the alloying elements are between following limits: chromium: from 0.10wt% to 1.0wt%; nickel: from 0.05wt% to 2.0wt%, cobalt: from 0.05wt% to 3.0wt%; vanadium: 0.05wt% to 1.0wt%; molybdenum: from 0.05wt% to 0.60wt%; copper: from 0.10wt% to 0.40wt%; boron: from 0.001wt% to 0.010wt%; niobium: from 0.001wt% to 0.50wt%; titanium: from 0.001wt% to 0.50wt%; antimony: from 0.0005wt% to 0.08wt%; calcium: from 0.001wt% to 0.05wt% ; tungsten: e.g. in an amount of about 0.20wt%; zirconium: e.g. in an amount ranging from 0.01wt% to 0.10wt%; aluminium: preferably in amounts lower than 0.035wt%, e.g. lower than 0.015wt%, e.g. lower than 0.005wt%; nitrogen: in amounts less than 0.005wt%; rare earth metals (wt%REM): in amounts ranging from 0.010wt% to 0.050wt%.

Micro alloying allows to reach tensile strengths in excess of 3500 MPa, or higher than 3700, even up to and above 4000 MPa.

In an alternative approach, low carbon steels can be used that have been far drawn in order to reach sufficient tensile strength. Typical steel compositions then have a carbon content of less than 0.20 wt%. An example is a carbon content ranging between 0.04 wt% and 0.08 wt%, a silicon content of 0.166 wt%, a chromium content of 0.042 wt%, a copper content of 0.173 wt%, a manganese content of 0.382 wt%, a molybdenum content of 0.013 wt%, a nitrogen content of 0.006 wt%, a nickel content of 0.077 wt%, a phosphorus content of 0.007 wt%, a sulphur content of 0.013 wt%, all percentages being percentages by mass. The ultimate tensile strength of these filaments is considerably lower: above 1200 MPa or even above 1400 MPa, but they have a reduced carbon footprint due to the elimination of intermediate heat treatments.

The amount of iron found in this disc shaped volume is at least 4 atomic percent of iron, preferably even 5 atomic percent of iron. In any case it is never more than 10 atomic percent and possibly lower than 7.5 atomic percent. The advantage of the increased iron content at the surface is that the adhesion retention in hot and humid conditions is improved in compounds that are free of any added cobalt but also in the currently used cobalt containing compounds.

It is preferred that the amount of iron steadily increases with increasing measuring depth from the already high level in the first layer. According a second embodiment the average iron content in a second layer that extends from the surface to a depth of 9 nanometer below the surface is therefore higher than 5 atomic percent or even higher than 6 atomic percent.

When sputtering to a depth of 20 nanometer below the surface of the filament - a third layer - the brass coating has an average iron content of 6, 8 or 10 atomic percent or more, a third embodiment.

According a fourth embodiment the average iron content in this third layer is lower than 20 atomic percent of iron, or lower than 15 at%, or even lower than 13 at%, or lower than 11 at% , the percentage being take over the total of iron, zinc, and copper atoms detected in the third layer. Indeed a too high iron content may lead to a lack of brass, the brass that is ultimately needed for generating adhesion. It appears that an iron concentration of between 8 to 11 at% in the third layer (0 to 20 nm) gives the best balance in adhesion. Although a value higher than 11 at% results in an increased adhesion retention in hot and humid circumstances, the initial adhesion is less satisfactory. A value lower than 8% results in a good initial adhesion, but a less than optimal increase in adhesion in hot and humid circumstance.

The balance of iron and brass is a delicate one: too much brass on the steel cord may lead to other adhesion retention problems, so it is best that the average thickness of the brass remains below 1350 × d or less, wherein 'd' is the diameter of the filament in millimeter. For example the average thickness may remain below 1200 × d or less or even below 1000 × d or less.

In a further embodiment, the iron is additionally finely dispersed inside the brass coating. The way to verify this is to observe the surface of the filament under a Scanning Electron Microscope operating in a Back Scattered Electron mode (BSE). These electrons are back scattered elastically ('reflected') from the nuclei of the probed surface and are indicative of the average atomic weight of the surface atoms probed. Heavier elements such as copper and zinc will more efficiently return electrons than lighter atoms such as iron. Therefore brass coated parts of the surface of the filament that are thicker will appear lighter in grey-tone than thin brass coatings on the bare steel surface, that will therefore appear darker.

When now observing the surface of the filament in the BSE mode, the coating will show alternating thin brass stripes and thick brass stripes oriented along the length of the steel filament. The thick brass stripes, containing more copper and zinc than iron, appear relatively lighter than the thin brass stripes showing more iron atoms. Within the context of this application the terms 'lighter' and 'darker' are therefore to be understood as to be relative to one another just like the terms 'thin' and 'thick'. Even an unexperienced electron microscopist will easily be able to tune the electron beam in order to obtain maximum BSE contrast on the surface of the filament.

Particular about this embodiment is now that in said thick brass stripes there is iron present at least at the surface. An average iron content of at least 4 atomic percent or more is present on the total of iron, copper and zinc. The average is taken over the top 3 nanometer from the surface of the thick brass strip.

In this case the amount of iron is determined by means of Scanning Auger Electron Spectroscopy (AES) that allows for a spatially very narrow probing of the surface (about the size of the impinging electron beam i.e. a diameter of 100 nm) to a very small depth: for the elements in question this is about 0.5 nm. As in the XPS measurement a depth profile is made by subsequently peeling off the top layer by sputtering the atoms by means of argon ions. By subsequently integrating the iron profile by means of the trapezoidal rule and division by the total depth of the profile the average iron content can be determined.

Alternatively the average amount of iron detected in the top 3 nm layer of the thick brass stripes is equal to 6 atomic percent or more on the total of iron, copper and zinc.

Additionally the average amount of iron detected over a depth within the top 9 nanometer from the surface of said thick brass strip is equal to or higher than 8 atomic percent or more on the total of iron, copper and zinc.

According a second aspect of the invention, a steel cord is presented. The steel cord comprises one, two or more filaments assembled together. The steel filaments are according one or more of the previously described embodiments.

In another preferred embodiment of the invention, the steel cord consists of a single filament. Such a single filament can be used in a tire for example in the bead area as a bead reinforcement or in the belt area as a belt stiffening reinforcement ('monofilament'). Such monofilaments can be made in larger diameter such as between 0.25 to 0.70 mm - for example between 0.30 and 0.35 mm - for the reinforcement of the tire belt or with a diameter of 0.70 to 2.10 mm for bead reinforcement. Alternatively, a single steel filament according the invention can also be used as a hose reinforcement wire.

With 'comprising' is meant that besides the steel filaments other non-steel filaments such as aramid or high density polyethylene fibres may be mingled with the steel filaments. Alternatively, the steel cord may also consist solely out of steel filaments.

The steel cords are assembled according the art and technique known as such:

a. An single layer cord such a 'n×d' wherein 'n' filaments each with diameter 'd' are twisted together with a lay direction and lay length forming a strand. 'n' can be 2 to 5, at the most 6, while 'd' varies between 0.10 and 0.50 mm. Possibly the filaments are deformed in order to obtain an 'open cord' wherein filaments form individualised helices that loosely touch one another. An exemplary cord is 3×0.30 OC;

b. In multiple layered cords layers are wound with a lay length and direction around a core that can be a single filament or a strand by itself. They are usually noted as core+m×d, wherein the 'core' is e.g. equal to 'n×d' or a single filament with diameter 'd'. Examples are 1+6 e.g. 0.32+6×0.30 or 3+9 e.g. 3×0.22+9×0.20, or three layer cord such as (3+9+15)×0.175 wherein all filaments have the same diameter. When the lay direction and the lay length of all layers are equal to one another, the filaments form a compact configuration known as a 'Compact Cord' e.g. 27×0.175 mm.

c. When different strands are combined and twisted around one another one obtains a multi-strand cord of the type M×N, e.g. of the type 4×(1+6) wherein 4 strands of 7 filaments are twisted together with a cord lay length and cord lay direction. When the strand lay direction is opposite to the cord lay direction, e.g. the strands in the 's' direction and the cord in the 'Z' direction this is called regular lay. When both the lay direction of the cord and the outer strands are equal one calls this 'Lang's lay'. The latter cords can reach a much higher elongation;

d. A special kind of multi-strand cord is a cord consisting of two strands 'L' and 'T' that have at least different lay lengths. The twisted strand 'T' ('Twisted') has a shorter lay length than the lay length of strand 'L' ('Long lay length'), the latter for example having an almost infinite lay length. The two strands are wound around each other with a cord lay length and direction. A particularly preferred embodiment is when the strand 'T' has lay length and direction that is equal to the lay length and direction of the cord. Particularly preferred examples are 2+2, 2+3, 2+4, 3+2, 3+3 wherein the first number refers to the number of filaments in the 'L' strand and the second number refers to the number of filament in the 'T' strand.

According a third aspect of the invention a rubber product is claimed that is reinforced with the steel cords as defined here above. The rubber product can be a tire for example for a passenger car, a truck, a van or an off-the-road machine, a hose, a belt, such as a conveyor belt or an elevator belt, or any other rubber based article that can be reinforced with steel cord. All of these products are manufactured and assembled in the ways known or to be become known in their respective art. The only difference is that the steel cord used for the reinforcement comprises filaments having an average iron content of 4 or more atomic percent in the first layer extending from the surface of the filament to a depth of 3 nanometer below the surface, the iron content being expressed as atomic percent related to the total of iron, zinc, and copper as determined by X-Ray photo electron spectroscopy, over four spots on the surface of the steel filament.

A particular embodiment of the invention according the third aspect is a rubber product whereof the vulcanised or unvulcanised rubber is substantially free of cobalt or cobalt containing compounds. Indeed, the steel cord has been invented in order to be compatible with adhesion rubber compounds - known as 'skim compounds' - that are substantially free of cobalt or organic cobalt compounds added to the rubber.

With 'substantially free' is meant that in the vulcanized rubber the amount of cobalt as detectable by X-Ray fluorescence is below 100 microgram per gram of rubber (0.01 percent Co by mass of rubber, wt%), or below 50 microgram per gram of rubber (0.005 wt% Co) or even below 20 (0.002 wt% Co) or 10 (0.001 wt% Co) microgram per gram of rubber.

As normally the skim compound contains organic cobalt compounds, the analysis is best performed on the rubber in the vicinity of the steel cord for example the remaining rubber that adheres to the steel cord when the steel cord is pulled out of the rubber product. That is the place where one expects the highest concentration of cobalt.

It is a particular advantage of the invention that it is still compatible with currently used cobalt containing compounds with positive effects to the adhesion and adhesion retention compared to currently used brass steel cords.

According a fourth aspect of the invention a method to produce a steel filament as described hereinabove comprising the steps of:

a. Selecting a wire rod with a steel composition as proposed in the product description hereinbefore. Steel wire rod has a diameter of about 5.5 mm or higher. The wire rod is descaled and coated with a soap carrier according the skills known in the art;

b. The wire rod is dry drawn to an intermediate wire. The intermediate wire has a diameter between 0.50 and 3.20 mm, for example 1.20 to 2.50 mm;

c. The intermediate wire is subsequently patented. Patenting is an operation known as such by the skilled person. In the patenting operation the wire is brought to above the austenization temperature of the steel that is generally between 950°C to 1050°C for dissolving the carbon into the iron lattice. Subsequently the intermediate wire is held at a soaking temperature between 550°C and 660°C thereby restoring the original fine pearlitic steel structure of the wire rod. This structure is particularly favoured because it can easily be drawn to finer diameters. The resulting wire is a patented wire;

d. Subsequently this wire is pickled to remove any excess oxides or drawing residues by guiding the wire through a bath containing an acid. Typically hydrogen sulphate or hydrogen chloride or similar strong acids are used to that purpose;

e. The patented wire is further electrolytically coated with copper in a manner known per s6 in an amount adjusted to reach the proposed compositions and mass. Typical copper plating baths are copper sulphate or copper pyrophosphate baths, having compositions, concentrations, pH values, and being operated at current densities that are known to the skilled person;

f. Subsequently, the copper coated wire is electrolytically coated with zinc metal in an amount sufficient to reach the proposed brass composition. A typical zinc plating bath is a zinc sulphate bath with composition, concentration, pH values operated at current densities as known in the art;

g. In a further step brass is formed by diffusing zinc and copper through application of heat in a manner known per sé. Heat can be generated by resistive heating of the wire either by electrical current driven through the steel wire or by means of electromagnetically induced eddy currents;

h. By drawing the brass plated wire in a wet wire drawing bench the steel filament according the invention is formed. In such operation the brass plated wire is immersed in a lubricant and drawn through a series of dies with gradually smaller orifices;

Characteristic about the process is that the intermediate wire has a circumferential arithmetic mean deviation $R_a$ or 'circumferential roughness' hereinafter that is larger than 0.40 micrometer, for example larger than 0.50 or even larger than 0.55 micrometer. If the 'roughness' is lower than 0.40 micrometer, the advantageous effects on adhesion will occur to a lesser extent. The circumferential arithmetic mean deviation is not higher than 1.00 micrometer, for example below 0.95 micrometer. A too high circumferential roughness leads to loss in fatigue properties.

The definitions as stipulated in the international standard ISO 4287:1997 "Geometrical Product Specifications (GPS) - Surface texture: Profile method - Terms, definitions and surface texture parameters" apply. The 'Arithmetic mean deviation $R_a$' is defined as:

$$R_a = \frac{\int_0^{L_e} \left| r(\xi) - \overline{r(\xi)} \right| d\xi}{L_e}$$

Wherein $L_e$ is the evaluation length in the circumferential direction $\xi$ of the wire, $|r(\xi) - \overline{r(\xi)}|$ is the absolute deviation from the mean in the direction radial to the wire axis, where $\overline{r(\xi)}$ is the mean value of the radial deviation over the evaluation length $L_e$. As physically the measurement will be presented in a numerical format, the integral can be replaced with a discrete summation running over the complete evaluation length spanned by $N$ discrete deviation measurement $r_i$, i running from 1 to $N$.

The roughness is to be determined preferably by a stylus type of equipment wherein the stylus measures variations in the radial direction while the wire rotates. The recommendations of ISO 4288:1996 are to be followed in that for an expected roughness, of between 0.40 and 1.00 micrometer a minimum evaluation length $L_e$ of 4 mm must be observed, with a cut-off length $\lambda_c$ of 0.80 mm. The cut-off length $\lambda_c$ used in the analysis discriminates between waviness of the profile and the actual roughness. If the wire has a diameter below 1.27 mm, an overlap must be introduced in order to reach the required evaluation length. Optical methods based on a perpendicular cross section of the wire can also be used provided the same analysis methodology is followed.

According to the method of the invention to produce the steel filament, one or more dies comprising diamond are used in the one or more last passes of wet wire drawing. Non-exhaustive examples of what is meant with 'die comprising diamond' are dies made of a single natural diamond, a single artificial diamond, a compact of diamond particles sintered together ('sintered diamonds'), carbonado ('black diamond') or polycrystalline diamonds ('PCD dies'). It is the experience of the inventors that - in combination with an increased circumferential roughness on the intermediate wire - the amount of iron at the surface is increased when using dies comprising diamond compared to the generally used and accepted tungsten carbide dies.

Another refinement of the method is that the pickling step of the intermediate wire is performed in hydrochloric acid wherein the concentration of iron(III) that is between 6 and 15 gram per liter, or even between 7 and 15 gram per liter, or between 8 and 13 gram per liter. These are unusually high concentrations for iron(III) ions in the hydrochloric acid. The inventors have experienced that such a high concentrations lead to an increased attack of the wire surface and hence an increased roughness. The increased roughness results in more iron at the surface.

In a further alternative of the method, after the step of electrolytically coating the patented and copper coated wire with a zinc coating (step 'f') the wire is led through an acidic bath containing iron(II) cations. Only thereafter the copper and zinc are diffused to brass (step 'g'). The zinc surface atoms are exchanged with iron atoms and increase the surficial presence of iron.

In a further alternative of this method, after the step of electrolytically coating the patented and copper coated wire with a zinc coating (step 'f') the wire is led through an acidic bath containing iron(II) cations. The zinc surface atoms are exchanged with iron atoms. Thereafter an additional layer of zinc is electrolytically deposited on top of the iron exchange layer. Only thereafter diffusion is performed. This alternative has the advantage that the added iron is buried in the zinc layer.

Possible acidic bath compositions containing iron(II) cations are:

- Ferrous chloride solutions;
- Ferrous sulfate solutions;
- Ferrous ammonium sulfate solutions;
- Ferrous fluoroborate solutions;
- Ferrous sulfamate solutions;
- Mixed sulfate - chloride baths;

**Brief Description of Figures in the Drawings**

FIGURE 1: atom concentration profile $(Fe)_i$ of Fe relative to the sum of Fe, Cu, and Zn atoms for the reference sample and different samples according the invention;

FIGURE 2: atom concentration profile $(Fe)_i$ of Fe relative to the sum of Fe, Cu, and Zn atoms for the reference sample and different samples according the another embodiment of the invention;

FIGURE 3: BSE SEM picture showing the thick brass stripes appearing relatively light and the thin brass stripes appearing relatively dark;

FIGURE 4: Shows an enlarged and 180° turned part of FIGURE 3 by means of secondary electron imaging in the Scanning Auger Microscope wherein the analysis points for elemental analysis are indicated;

FIGURE 5: shows the difference in iron distribution in the thin brass stripes (i.e. appearing darker) for the reference sample and two inventive samples as measured by Auger depth analysis;

FIGURE 6: shows the difference in iron distribution in the thick brass stripes (i.e. appearing lighter) for the reference and two inventive samples as measured by Auger depth analysis;

## Mode(s) for Carrying Out the Invention

For making samples of the invention the inventors departed from a high carbon steel wire rod of carbon class 0.80 wt%C with diameter 5.5 mm nominal.

The wire was dry drawn to an intermediate diameter of 1.85 mm. Care was taken to obtain a sufficiently high circumferential roughness $R_a$ of about 0.90 $\mu$m. The circumferential roughness of the intermediate wire $R_a$ can be increased by increasing the drag-in of soap powder in the dry drawing step, by reducing the reduction of the last die in the dry drawing step, by reducing the drawing speed in dry drawing, by decreasing the die angle in dry drawing or by a combination of any of the above. On the intermediate wire a circumferential roughness $R_a$ of between 0.80 to 1.00 $\mu$m was thus obtained.

Subsequently the wire was cleansed by pickling a method known per s6 by the skilled person. The generally used acid for pickling purposes is hydrochloric acid. However, by keeping the concentration of the iron(III) cations above 6 gram per liter and below 15 gram per liter - which are unusual conditions for the skilled person - the circumferential roughness can be further increased.

Thereafter the wire was coated with copper by electrolytic deposition out of a copper pyro sulphate deposition bath. After proper rinsing and drying the wire is electrolytically coated with zinc deposited out of a zinc sulphate bath. These are techniques known to the skilled person.

Following zinc deposition, iron may be deposited out of an acidic electrolytic solution containing iron(II) cations by an exchange reaction with the zinc. As the zinc is less noble than the iron, zinc cations will go into solution and the iron(II) cations will deposit in order to preserve charge neutrality. A ferrous sulphate solution seems most appropriate to deposit the iron, as the acid is compatible to that of the zinc electrolyte. The amount of iron deposited will depend on the immersion time of the wire.

Thereafter the copper and zinc is diffused by heating the wire by resistive heating or by mid frequency induction heating, the exchanged iron remaining present at the surface.

Patenting, copper plating, zinc plating, iron deposition and diffusion are performed in line on a run through installation wherein a spool of intermediate wire is unwound, guided through the installation and the resulting brass plated wire is wound on a take-up spool.

In a subsequent step the wire is wet wire drawn into a steel filament of diameter 0.28 mm. By using diamond dies in the one or more of the last passes i.e. the dies situated towards the exit of the wet wire drawing bench, the wire is well drawable. In particular drawability is a problem when the brass is enriched with iron through the zinc - iron exchange reaction.

By varying the different parameters mentioned above a series of samples was made that showed increasingly higher iron concentrations at the surface. As a reference a regular brass wire was used that followed the same routing but of which the surface roughness of the intermediate wire was below 0.40 $\mu$m, pickling conditions were normal (iron(III) cation concentration between 4 and 7 grams per liter), no supplemental addition of iron took place and drawing was done in regular widia dies. This sample is indicated with 'Ref' for Reference.

By means of XRFS the mass of copper and zinc per mass unit of steel cord was determined according the method known by the skilled artisan. Out of the total mass of copper and zinc the average thickness of the coating (expressed in nm) can be calculated. The mass percentage of copper is calculated through the ratio of copper mass over total mass of copper and zinc.

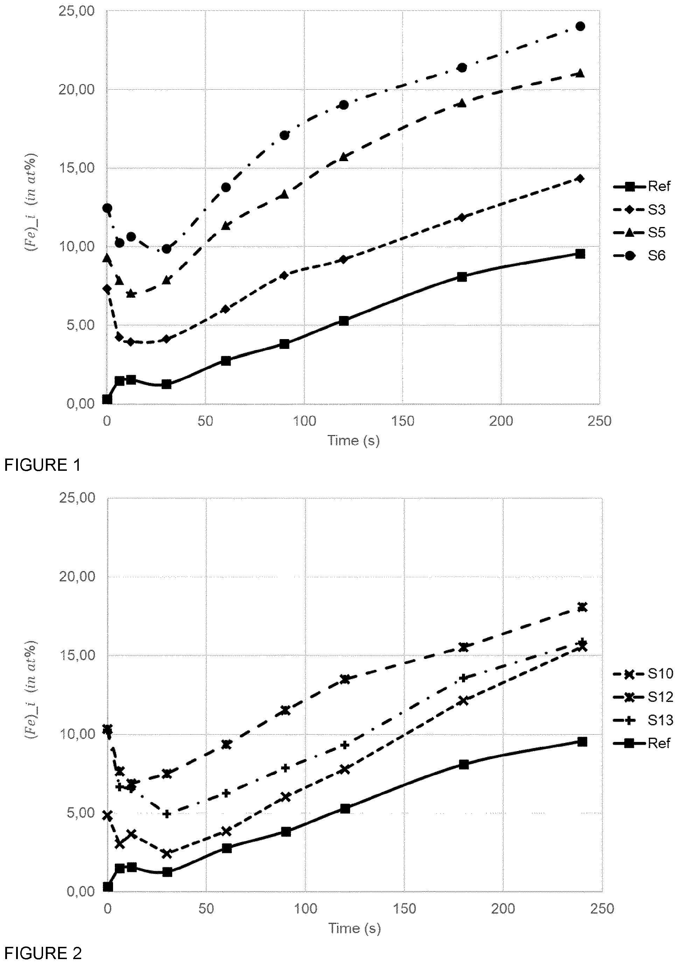

The iron distribution at the top layer of the brass coating was measured by means of X-ray photo-electron spectroscopy. The equipment used was a K-Alpha X-Ray Photoelectron Spectrometer (XPS) system obtainable from Thermo Fisher Scientific. Typically the depth of analysis of the sample is 2 to 5 nm over a beam area of about 8 000 $\mu$m$^2$. From the kinetic energy distribution of the emitted electrons, information of the atoms probed can be obtained in terms of element number (energy position of peak) and number of atoms present (height of the peak). While many elements can be probed, only the counts on copper, zinc and iron are retained. By stepwise removing the top layer of atoms by means of an argon gun, a depth profile of the atomic distribution on top of the layer is obtained. Examples of traces can be found back in FIGURE 1 and 2 that shows the $(Fe)_i$ amount in atomic percent in total of the Cu, Zn and Fe atoms detected at different total sputtering times. For a calibrated argon beam 10 seconds of sputtering amounts to about 1 nm of material removed. It is clear from the traces that the amount of iron present at the surface increases much more in the inventive wires compared to the reference wire (indicated with 'Ref').

By means of the trapezoidal rule, the average iron content is calculated over a layer extending from the surface '0' to a depth of 'x' nanometer, 'x' taking the values of 3, 9 and 20 nm, corresponding to first, second and third layer. This procedure is repeated on four traces taken at different spots on the surface of one steel filament in order to prevent that measurements are biased through local variations in the coating.

In this way the following TABLE I is constructed (the numbers in italic fall under the terms of the claims):

TABLE I

| | Average iron concentration over depth | | | | | |
|---|---|---|---|---|---|---|
| Sample | 0 - 3 nm | 0 - 9 nm | 0 - 20 nm | t(nm) | wt%Cu | Die |
| Ref | 1.3 | 1.7 | 2.2 | 254 | 63.2 | W |
| S2 | 3.3 | 3.6 | 4.3 | 249 | 64.3 | D |
| S3 | 4.4 | 4.7 | 5.5 | 244 | 64.9 | D |
| S4 | 6.5 | 7.2 | 8.2 | 238 | 66.5 | D |
| S5 | 7.7 | 8.6 | 9.9 | 234 | 68.6 | D |
| S6 | 10.5 | 11.2 | 12.6 | 220 | 70.2 | D |
| S7 | 6.8 | 7.3 | 8.2 | 225 | 69.6 | D |
| S9 | 2.5 | 3.0 | 3.8 | 253 | 64.3 | W |
| S10 | 3.3 | 3.2 | 3.8 | 249 | 64.9 | W |
| S11 | 5.4 | 6.0 | 6.6 | 241 | 66.7 | W |
| S12 | 7.6 | 8.0 | 8.8 | 236 | 68.5 | W |
| S13 | 6.5 | 6.0 | 6.4 | 230 | 69.7 | W |

In TABLE I, the only difference between samples (S2,S9), (S3, S10), (S4, S11), (S5, S12) and (S6, S13) is that the first member of the pair is drawn by means of diamond die ('D'), while the second member is drawn by means of a conventional tungsten carbide die (W). It is to be noted that the use of diamond containing dies always appear to lead to an increased presence of iron at the surface which is in line with the invention, namely to increase the presence of iron at the surface.

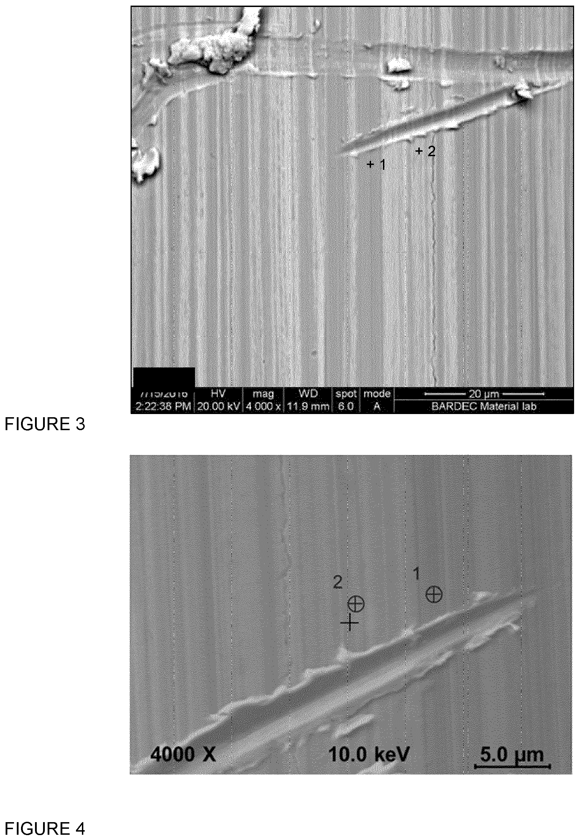

FIGURE 3, shows a picture of the surface of brass filament formed by backscattered electrons in the BSE mode of a scanning electron microscope (FEI Inspect model). In this picture the coating shows alternating lighter and darker stripes in the direction of the wire. The lighter stripes correspond to thicker brass stripes - of which a point is indicated with the '+ 2' reference - while the darker stripes relate to a relatively thin coating for example at the point indicated by '+ 1'. A scratch was deliberately made in order to allow the analysis of the same spot in a Scanning Auger Microscope.

FIGURE 4 shows the same region but in 'secondary electron imaging' (SEI) mode as observed in a Scanning Auger Microscope of PHI. Note that the orientation is turned 180° and the magnification is times four compared to FIGURE 3. At the indicated spots '1' and '2' Auger electron profiles were measured by means of a 'PHI-700 Scanning Auger Nanoprobe' obtainable from ULVAC-PHI. By this procedure, the depth profiles obtained in both regions can be compared to one another for different samples. Auger analysis differs from XPS in that the analysis region is very small, typically below 100 nm$^2$ whereas for XPS this is several square micrometer.

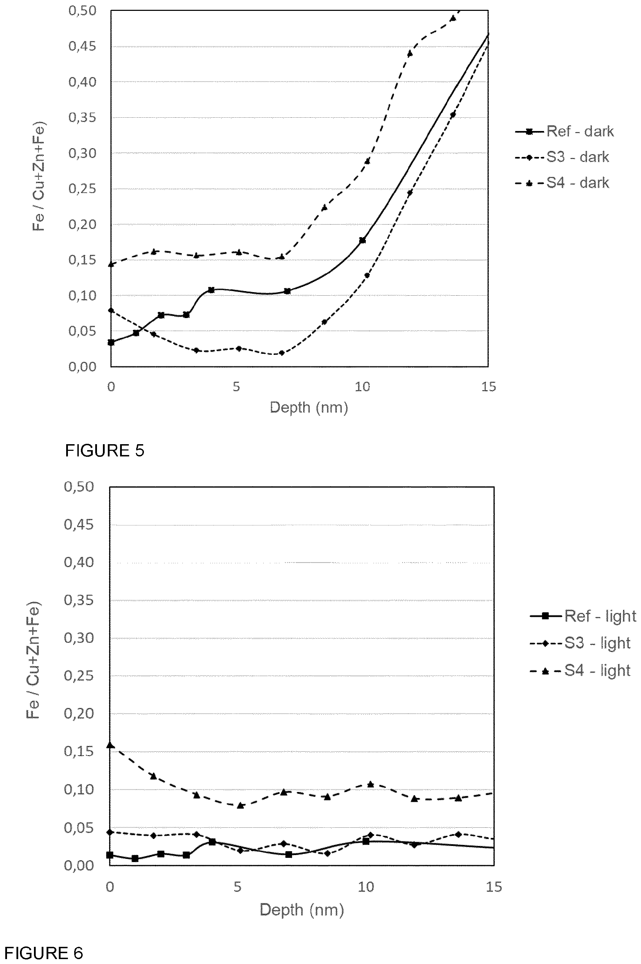

FIGURE 5 shows the presence of iron relative to the total of iron, copper and zinc in an area that appears dark in BSE mode of SEM. As expected - as there the brass coating is thin - the amount of iron present sharply rises when the steel substrate is reached, which typically occurs within 10 nm. Both the samples according the invention and the reference may show a marked presence of iron with the first few nanometers.

In contrast therewith when analysing the presence of iron in a region that appears light in BSE mode of SEM on the Reference sample, there is only a very limited presence of iron relative to the total of iron, copper and zinc in the first 3, 10 or even 15 nm from the surface: on average this remains below 0.03 or 3 atom percent. However, in the inventive samples, S3 and S4 there is already a marked presence of iron detected even in the thick brass area even at very low depth. When calculating the average atom percentage of iron in the different samples the following results are obtained (TABLE II):

TABLE II:

| Sample | 0 to 3 nm (Fe at%) | 0 to 9 nm (Fe at%) | 0 to 15 nm (Fe at%) |
|---|---|---|---|
| Ref. | 1.3 | 2.0 | 2.2 |
| S3 | 4.1 | 3.1 | 3.2 |

(continued)

| Sample | 0 to 3 nm (Fe at%) | 0 to 9 nm (Fe at%) | 0 to 15 nm (Fe at%) |
|---|---|---|---|
| S4 | 12.2 | 10.2 | 9.9 |

The presence of an increased amount of surficial iron results in an improved adhesion performance in cobalt salt containing as well as cobalt free compounds as will be demonstrated hereinafter.

Three filaments of 0.28 mm of each type of Reference and sample filaments were twisted together to form a 3×0.28 mm steel cord. These steel cords were used for performing adhesion tests in a large number of different adhesion compounds basically falling apart in two groups:

- Group I contains 6 different compounds with the common feature that they do contain intentionally added organic cobalt salts;
- Group II contains 6 different compounds that are all free of intentionally added cobalt.

For each one of the twelve compounds the conditions for regular cure (RC) were set as the TC90 time plus 5 minutes, TC90 being that time where the particular rubber reaches 90% of its maximum torque on a rheometer curve taken at the vulcanisation temperature.

In order to establish the adhesion retention the following aging conditions are applied to RC cured samples:

- After Cured Humidity aging (CH): RC samples are held at 93°C in a 95% relative humidity environment for 14 days
- After Steam Aging (SA): in which RC samples are steam cooked at 120°C for 2 days .

In what follows each of the vulcanisation conditions RC, CH or SA will be referred to as a 'Condition'.

Adhesion results are pull-out forces as determined according to the ASTM D2229-04 standard, as further detailed in the BISFA ("The International Bureau for Standardisation of Man-made fibres") brochure 'Internationally agreed methods for testing of steel tyre cord' 1995 Edition, "D12 Determination of static adhesion to rubber compounds". In this test steel cords are embedded in a block shaped rubber and pulled out of the rubber along the axial direction after vulcanisation. The maximum force (in N) attained is noted. The average of several (at least four) measurements of individual maximum forces (in N) is noted as the 'Pull-Out Force' (POF) for one sample, one Group, one Condition combination.

The results of the adhesion tests are represented in the TABLE III and TABLE IV below as a Z-score relative to a Reference Average ('RA'). The Reference Average RA is equal the weighted average of the 'Ref' sample i.e. a regular brass coating drawn in tungsten carbide dies in all cobalt containing compounds of Group I and this for the particular Condition as per the heading of the column. The Reference Standard Deviation ('RSTD') is equal to the statistical standard deviation of all results obtained on the Reference sample in the Group I compounds in the particular Condition. In short: the deviations in positive or negative are calculated relative to the known brass steel cord drawn in tungsten carbide dies tested in a cobalt containing rubber for each of the different Conditions.

For each of the Groups I and II and for a selection of samples ('Samples') of Table II the Pull-Out Force has been determined for each Condition. The Pull-out Forces are weight averaged to a Sample Average ('SA') and the statistical standard deviation calculated, referred to as the Sample Standard Deviation, ('SSTD') for that Family and Condition.

The Z-score of a Sample in a Group of compounds for a certain Condition is then equal to the difference between the Sample Average for that Group and Condition minus the Reference Average for that Condition divided by the pooled standard deviation of the Reference Standard Deviation and Sample Standard Deviation. In short:

$$Z = \frac{SA - RA}{\sqrt{\frac{((N_S - 1)SSTD^2 + (N_R - 1)RSTD^2)}{N_S + N_R - 2}}}$$

Wherein $N_S$ is the number of results pooled to obtain SA and SSTD and $N_R$ is the number of results pooled to obtain RA and RSTD.

The Z-score indicates in how for the deviations from the averages are statistically significant from the Reference Average i.e. the current state of the art in the particular Group and Condition the Sample has been tested:

- Z-scores that are below '-2' indicate statistically significant deterioration compared to the Reference Average;
- Z-scores between -2 and -1 are indicative for a possible deterioration but are not statistically significant;
- Z-scores between '-1' and '+1' indicate that no statistical significant deterioration or improvement to the Reference Average can be inferred;
- Z-scores between +1 and +2 are indicative for a possible improvement that is not statistically significant;
- Z-scores above +2 represent a statistically significant improvement to the current state of the art.

TABLE III summarizes the Z-sore results obtained on the selected samples as obtained in Group I compounds. Conclusions are:

- In regular cure (RC) the overall results are neutral to non-significantly lower compared to the reference for average iron concentrations below 7.5 at% Fe within 0 to 3 nm.

  Samples with an average iron concentration above 7.5 at% Fe (S6, S12) show a significantly lower result to the Reference (double underlined).
  A too high iron content at the surface therefore has a detrimental effect on Regular Cure results;

- For cured humidity (CH) the results generally are better compared to the standard Reference (all positive signs).

  The results on samples (S4, S5, indicated bold) show a significant improvement in CH results in cobalt containing compounds. However, samples drawn with conventional tungsten carbide dies show lower results
  An average iron concentration of higher than 4 at%Fe at the surface of the steel filament therefore has a positive effect on the cured humidity aged adhesion retention;

- In steam aging (SA) a general positive improvement is found that is significant for an average iron concentration of higher than 4 at%Fe at the surface of the steel filament.
  Samples drawn with tungsten carbide dies result in lower values.

Samples having a 4 to 7.5 at% Fe in the top 0 to 3 nm of the steel filament perform best over the three Conditions in adhesion rubbers comprising cobalt compounds.

TABLE IV summarizes the Z-sore results obtained on selected samples of Group II compounds. Conclusions are:

- In regular cure (RC) the overall results are neutral to not significantly negative compared to the Reference for average iron concentrations below 7.5 at% Fe within 0 to 3 nm of the surface for samples drawn with dies comprising diamond. Samples drawn with tungsten carbide score significantly lower;
- In cured humidity aging (CH) all inventive samples score better than the Reference, and are significantly better than Reference for average iron concentrations above 4 at% Fe within 0 to 3 nm;
- In steam aged samples (SA) all inventive samples score significantly better than the Reference.

In conclusion: inventive samples with an average iron content above 4 at% Fe and below 7.5 at% Fe within the 0 to 3 nm of the surface show equal results for regular cure and improved results for cured humidity aged and steam aged conditions in adhesion compounds comprising cobalt salts. When tested in adhesion compounds that are substantially free of cobalt, the results after cured humidity aging and steam aging are significantly better, while regular cure results are only moderately lower. Using one or more dies comprising diamonds in the one or more last passes in wet wire drawing further improves these results.

TABLE III:

| Sample | RC | CH | SA |
|--------|------|-----|-----|
| Ref | 0 | 0 | 0 |
| S2 | -0.3 | 1.0 | 1.7 |
| S3 | -0.1 | 1.8 | **2.2** |
| S4 | 0.0 | **2.3** | **3.9** |
| S5 | -1.6 | **2.3** | **4.0** |
| S6 | <u>-2.2</u> | 1.8 | **4.9** |

(continued)

| Sample | RC | CH | SA |
|--------|------|-----|-----|
| S7 | -0.1 | 1.8 | **2.7** |
| S11 | -1.0 | 1.2 | 0.7 |
| S12 | -3.3 | 1.4 | 2.4 |

TABLE IV:

| Sample | RC | CH | SA |
|--------|------|------|-----|
| Ref | -3.4 | -1.4 | **3.1** |
| S2 | -1.0 | 1.1 | **3.7** |
| S3 | -1.5 | **2.6** | **4.8** |
| S4 | -0.7 | **4.1** | **6.1** |
| S5 | -3.2 | 3.3 | **5.5** |
| S6 | -4.7 | 3.8 | **6.6** |
| S7 | -0.6 | 2.9 | **4.0** |
| S11 | -4.3 | 1.4 | **5.5** |
| S12 | -6.1 | 2.8 | **5.0** |

**Claims**

1. A steel filament with diameter 'd' being the diameter of an imaginary circle having the same surface area as the perpendicular cross section to said steel filament expressed in millimeter for reinforcing rubber articles comprising a steel substrate coated with a coating comprising brass,

    said brass consisting of copper and zinc;
    said coating having an average thickness of $450 \times d$ nanometer or more as determined by the total mass of copper and zinc of said brass;
    said brass having a mass of copper of between 61 to 75 mass percent compared to the total mass of copper and zinc in said brass,
    said thickness of said coating and said amount of copper in said brass being determined by wet chemical analytical methods,

    **characterized in that**
    said coating has an average iron content of from 4 to 10 atomic percent in the first layer, said first layer extending from the surface of said filament to a depth of 3 nanometer below said surface, said iron content being expressed as an atomic percent related to the total of iron, zinc and copper in said first layer, said iron, zinc and copper content being determined by X-Ray photo electron spectroscopy, said average being taken over the depth of said first layer and over 4 different spots on the surface of said steel filament.

2. The steel filament according to claim 1 wherein said brass coating has an average iron content of 5 atomic percent or more in a second layer,
    said second layer extending from the surface of said filament to a depth of 9 nanometer below said surface.

3. The steel filament according to claim 2 wherein said brass coating has an average iron content of 6 atomic percent or more in a third layer,
    said third layer extending from the surface of said filament to a depth of 20 nanometer below said surface.

4. The steel filament according to any one of claims 1 to 3 wherein said brass coating has an average iron content of 20 atomic percent or less in a third layer, said third layer extending from the surface of said filament to a depth of 20 nm below said surface.

5. The steel filament according to any one of claims 1 to 4 wherein said brass coating has an average thickness of 1350×d nanometer or less.

6. The steel filament according to any one of the preceding claims, wherein said coating shows alternating thin brass stripes and thick brass stripes oriented along the length of the steel filament, said stripes being discernable in a Scanning Electron Microscope operating in Back Scattered Electron mode, wherein thick brass stripes appear relatively light and said thin brass stripes appear relatively dark,
further **characterized in that**
in said thick brass stripes an average iron content of 4 or more atomic percent on the total of iron, copper and zinc is present, said average being taken over the depth within the top 3 nanometer from the surface of said thick brass strip, said iron, zinc, and copper content as determined by Scanning Auger electron Spectroscopy.

7. The steel filament according to claim 6 wherein in said thick brass stripes, an average iron content of 6 or more atomic percent on the total of iron, copper and zinc is present, said average being taken over the depth within the top 3 nanometer from the surface of said thick brass strip, said iron, zinc, and copper content as determined by Scanning Auger electron Spectroscopy.

8. The steel filament according to claim 7 wherein in said thick brass stripes, an average iron content is 8 or more atomic percent on the total of iron, copper and zinc is present, said average being taken over a depth within the top 9 nanometer from the surface of said thick brass strip, said iron, zinc and copper content as determined by Scanning Auger electron Spectroscopy.

9. A steel cord comprising one, two or more steel filaments according to any one of the preceding claims.

10. A rubber product reinforced with the steel cord according to claim 9, said rubber product being a tire, a hose, a belt or any other rubber based article reinforceable with steel cord.

11. The rubber product according to claim 10 wherein said rubber is substantially free of cobalt or cobalt containing compounds.

12. A method to produce a steel filament according to any one of the above claims comprising the steps of:

    a. Selecting a wire rod;
    b. Dry drawing said wire rod to an intermediate wire;
    c. Patenting said intermediate wire to a patented wire ;
    d. Pickling said patented wire ;
    e. Electrolytically coating said patented wire with a copper layer;
    f. Electrolytically coating said patented and copper coated wire with a zinc coating;
    g. Diffusing said copper coating and zinc coating on said patented wire to form a brass coating thus forming a brass plated wire;
    h. Wet wire drawing said brass plated wire into the steel filament;

    **characterized in that**
    said intermediate wire has a circumferential roughness $R_a$ that is larger than 0.40 micrometer, in the wire drawing of said brass plated wire one or more dies comprising diamond are used in the one or more last passes.

13. The method according to claim 12 wherein in step 'd' pickling is performed in a hydrochloric acid, said hydrochloric acid having a concentration of iron(III) ions that is between 6 and 15 gram per liter.

14. The method according to any one of claims 12 to 13 wherein after step 'f' and prior to step 'g' the wire is guided through an acidic bath containing iron(II) cations for exchanging zinc atoms with iron atoms at the top layer of said zinc coating.

15. The method according to claim 14 wherein said acidic bath is one out of the group consisting of:

- Ferrous chloride solutions;
- Ferrous sulfate solutions;
- Ferrous ammonium sulfate solutions;
- Ferrous fluoroborate solutions;
- Ferrous sulfamate solutions;
- Mixed sulfate - chloride baths;

**Patentansprüche**

1. Stahlfilament mit einem Durchmesser "d", der der Durchmesser eines imaginären Kreises mit dem gleichen Flächeninhalt wie der senkrechte Querschnitt des Stahlfilaments ist, ausgedrückt in Millimeter, zum Verstärken von Kautschukgegenständen, umfassend ein Stahlsubstrat, das mit einer Messing umfassenden Beschichtung beschichtet ist,

   wobei das Messing aus Kupfer und Zink besteht;
   wobei die Beschichtung eine mittlere Dicke von $450 \times d$ Nanometer oder mehr, wie bestimmt durch die Gesamtmasse von Kupfer und Zink des Messings, aufweist;
   wobei das Messing eine Masse von Kupfer von zwischen 61 und 75 Masseprozent bezogen auf die Gesamtmasse von Kupfer und Zink in dem Messing aufweist;
   wobei die Dicke der Beschichtung und die Menge des Kupfers in dem Messing durch nasschemische Analyseverfahren bestimmt sind;

   **dadurch gekennzeichnet, dass**
   die Beschichtung einen mittleren Eisengehalt von 4 bis 10 Atomprozent in der ersten Schicht aufweist, wobei sich die erste Schicht von der Oberfläche des Filaments zu einer Tiefe von 3 Nanometer unter der Oberfläche erstreckt, wobei der Eisengehalt als Atomprozent bezogen auf die Gesamtmenge von Eisen, Zink und Kupfer in der ersten Schicht ausgedrückt ist, wobei der Eisen-, Zink- und Kupfergehalt durch Röntgen-Photoelektronenspektroskopie bestimmt ist, wobei der Mittelwert über die Tiefe der ersten Schicht und über 4 verschiedene Stellen an der Oberfläche des Stahlfilaments genommen ist.

2. Stahlfilament gemäß Anspruch 1, wobei die Messingbeschichtung einen mittleren Eisengehalt von 5 Atomprozent oder mehr in einer zweiten Schicht aufweist, wobei sich die zweite Schicht von der Oberfläche des Filaments zu einer Tiefe von 9 Nanometer unter der Oberfläche erstreckt.

3. Stahlfilament gemäß Anspruch 2, wobei die Messingbeschichtung einen mittleren Eisengehalt von 6 Atomprozent oder mehr in einer dritten Schicht aufweist, wobei sich die dritte Schicht von der Oberfläche des Filaments zu einer Tiefe von 20 Nanometer unter der Oberfläche erstreckt.

4. Stahlfilament gemäß einem der Ansprüche 1 bis 3, wobei die Messingbeschichtung einen mittleren Eisengehalt von 20 Atomprozent oder weniger in einer dritten Schicht aufweist, wobei sich die dritte Schicht von der Oberfläche des Filaments zu einer Tiefe von 20 Nanometer unter der Oberfläche erstreckt.

5. Stahlfilament gemäß einem der Ansprüche 1 bis 4, wobei die Messingbeschichtung eine mittlere Dicke von $1350 \times d$ Nanometer oder weniger aufweist.

6. Stahlfilament gemäß einem der vorstehenden Ansprüche, wobei die Beschichtung abwechselnde dünne Messingstreifen und dicke Messingstreifen aufweist, die entlang der Länge des Stahlfilaments ausgerichtet sind, wobei die Streifen in einem Rasterelektronenmikroskop, das in einem Elektronenrückstreumodus arbeitet, erkennbar sind, wobei dicke Messingstreifen vergleichsweise hell erscheinen und die dünnen Messingstreifen vergleichsweise dunkel erscheinen,
   ferner **dadurch gekennzeichnet, dass**
   in den dicken Messingstreifen ein mittlerer Eisengehalt von 4 oder mehr Atomprozent bezogen auf die Gesamtmenge von Eisen, Kupfer und Zink vorhanden ist, wobei der Mittelwert über die Tiefe innerhalb der oberen 3 Nanometer von der Oberfläche des dicken Messingstreifens genommen ist, wobei der Eisen-, Zink- und Kupfergehalt wie durch Raster-Auger-Elektronenspektroskopie bestimmt ist.

7. Stahlfilament gemäß Anspruch 6, wobei in den dicken Messingstreifen ein mittlerer Eisengehalt von 6 oder mehr Atomprozent bezogen auf die Gesamtmenge von Eisen, Kupfer und Zink vorhanden ist, wobei der Mittelwert über die Tiefe innerhalb der oberen 3 Nanometer von der Oberfläche des dicken Messingstreifens genommen ist, wobei der Eisen-, Zink- und Kupfergehalt wie durch Raster-Auger-Elektronenspektroskopie bestimmt ist.

8. Stahlfilament gemäß Anspruch 7, wobei in den dicken Messingstreifen ein mittlerer Eisengehalt von 8 oder mehr Atomprozent bezogen auf die Gesamtmenge von Eisen, Kupfer und Zink vorhanden ist, wobei der Mittelwert über eine Tiefe innerhalb der oberen 9 Nanometer von der Oberfläche des dicken Messingstreifens genommen ist, wobei der Eisen-, Zink- und Kupfergehalt wie durch Raster-Auger-Elektronenspektroskopie bestimmt ist.

9. Stahlseil, umfassend ein, zwei oder mehr Stahlfilamente gemäß einem der vorstehenden Ansprüche.

10. Kautschukprodukt, verstärkt mit dem Stahlseil gemäß Anspruch 9, wobei das Kautschukprodukt ein Reifen, ein Schlauch, ein Band oder ein beliebiger anderer mit Stahlseil verstärkbarer Gegenstand auf Kautschukbasis ist.

11. Kautschukprodukt gemäß Anspruch 10, wobei der Kautschuk im Wesentlichen frei von Cobalt oder cobalthaltigen Verbindungen ist.

12. Verfahren zur Herstellung eines Stahlfilaments gemäß einem der vorstehenden Ansprüche, umfassend die Schritte:

    a. Auswählen eines Walzdrahts;
    b. Trockenziehen des Walzdrahts zu einem Mitteldraht;
    c. Patentieren des Mitteldrahts zu einem patentierten Draht;
    d. Beizen des patentierten Drahts;
    e. elektrolytisches Beschichten des patentierten Drahts mit einer Kupferschicht;
    f. elektrolytisches Beschichten des patentierten und kupferbeschichteten Drahts mit einer Zinkbeschichtung;
    g. Diffundieren der Kupferbeschichtung und Zinkbeschichtung auf dem patentierten Draht, um eine Messingbeschichtung zu bilden und so einen messingplattierten Draht zu bilden;
    h. Nass-Drahtziehen des messingplattierten Drahts zu dem Stahlfilament;

**dadurch gekennzeichnet, dass**
der Mitteldraht eine Umfangsrauigkeit $R_a$ aufweist, die höher als 0,40 Mikrometer ist, bei dem Drahtziehen des messingplattierten Drahts eine oder mehrere Ziehdüsen, die Diamant umfassen, bei dem einen oder mehreren letzten Durchläufen verwendet werden.

13. Verfahren gemäß Anspruch 12, wobei bei Schritt "d" Beizen in einer Salzsäure durchgeführt wird, wobei die Salzsäure eine Konzentration von Eisen(III)-Ionen aufweist, die zwischen 6 und 15 Gramm pro Liter beträgt.

14. Verfahren gemäß einem der Ansprüche 12 bis 13, wobei nach Schritt "f" und vor Schritt "g" der Draht durch ein saures Bad geführt wird, das Eisen(II)-Kationen enthält, um in der obersten Schicht der Zinkbeschichtung Zinkatome durch Eisenatome zu ersetzen.

15. Verfahren gemäß Anspruch 14, wobei das saure Bad eines aus der Gruppe bestehend aus:

    - Ferrochloridlösungen;
    - Ferrosulfatlösungen;
    - Ferroammoniumsulfatlösungen;
    - Ferrofluorboratlösungen;
    - Ferrosulfamatlösungen;
    - gemischten Sulfat-Chlorid-Bädern;

ist.

**Revendications**

1. Filament d'acier doté d'un diamètre « d » qui est le diamètre d'un cercle imaginaire ayant la même superficie que la section transversale perpendiculaire audit filament d'acier exprimé en millimètres pour le renforcement d'articles de caoutchouc comprenant un substrat d'acier revêtu par un revêtement comprenant du laiton,

ledit laiton étant constitué de cuivre et de zinc ;
ledit revêtement ayant une épaisseur moyenne de 450 $\times$ d nanomètres ou plus tel que déterminé par la masse totale de cuivre et de zinc dudit laiton ;
ledit laiton ayant une masse de cuivre comprise entre 61 et 75 pour cent en masse par comparaison avec la masse totale de cuivre et de zinc dans ledit laiton,
ladite épaisseur dudit revêtement et ladite quantité de cuivre dans ledit laiton étant déterminées par des procédés analytiques chimiques humides,

**caractérisé en ce que**
ledit revêtement possède une teneur moyenne en fer allant de 4 à 10 pour cent atomique dans la première couche, ladite première couche s'étendant depuis la surface dudit filament jusqu'à une profondeur de 3 nanomètres en dessous de ladite surface, ladite teneur en fer étant exprimée comme un pourcentage atomique par rapport à la quantité totale de fer, de zinc et de cuivre dans ladite première couche, ladite teneur en fer, en zinc et en cuivre étant déterminée par spectroscopie photoélectronique à rayons X, ladite moyenne étant prise sur la profondeur de ladite première couche et sur 4 points différents sur la surface dudit filament d'acier.

2. Filament d'acier selon la revendication 1, ledit revêtement de laiton ayant une teneur moyenne en fer de 5 pour cent atomique ou plus dans une deuxième couche, ladite deuxième couche s'étendant depuis la surface dudit filament jusqu'à une profondeur de 9 nanomètres en dessous de ladite surface.

3. Filament d'acier selon la revendication 2, ledit revêtement de laiton ayant une teneur moyenne en fer de 6 pour cent atomique ou plus dans une troisième couche, ladite troisième couche s'étendant depuis la surface dudit filament jusqu'à une profondeur de 20 nanomètres en dessous de ladite surface.

4. Filament d'acier selon l'une quelconque des revendications 1 à 3, ledit revêtement de laiton ayant une teneur moyenne en fer de 20 pour cent atomique ou moins dans une troisième couche, ladite troisième couche s'étendant depuis la surface dudit filament jusqu'à une profondeur de 20 nm en dessous de ladite surface.

5. Filament d'acier selon l'une quelconque des revendications 1 à 4, ledit revêtement de laiton ayant une épaisseur moyenne de 1350 $\times$ d nanomètres ou moins.

6. Filament d'acier selon l'une quelconque des revendications précédente, ledit revêtement présentant en alternance des bandes fines de laiton et des bandes épaisses de laiton orientées le long de la longueur du filament d'acier, lesdites bandes étant discernables dans un microscope électronique à balayage fonctionnant en mode de rétrodiffusion d'électrons, des bandes épaisses de laiton apparaissant relativement claires et lesdites bandes fines de laiton apparaissant relativement sombres,
en outre **caractérisé en ce que**
dans lesdites bandes épaisses de laiton une teneur moyenne en fer de 4 pour cent atomique ou plus basée sur la quantité totale de fer, de cuivre et de zinc étant présente, ladite moyenne étant prise sur la profondeur dans les 3 nanomètres supérieurs de la surface de ladite bande épaisse de laiton, ladite teneur en fer, en zinc et en cuivre étant déterminée par spectroscopie électronique Auger à balayage.

7. Filament d'acier selon la revendication 6, dans lesdites bandes épaisses de laiton, une teneur moyenne en fer de 6 pour cent atomique ou plus basée sur la quantité totale de fer, de cuivre et de zinc étant présente, ladite moyenne étant prise sur la profondeur dans les 3 nanomètres supérieurs de la surface de ladite bande épaisse de laiton, ladite teneur en fer, en zinc et en cuivre étant déterminée par spectroscopie électronique Auger à balayage.

8. Filament d'acier selon la revendication 7, dans lesdites bandes épaisses de laiton, une teneur moyenne en fer de 8 pour cent atomique ou plus basée sur la quantité totale de fer, de cuivre et de zinc étant présente, ladite moyenne étant prise sur la profondeur dans les 9 nanomètres supérieurs de la surface de ladite bande épaisse de laiton, ladite teneur en fer, en zinc et en cuivre étant déterminée par spectroscopie électronique Auger à balayage.

9. Câble d'acier comprenant un, deux filaments d'acier ou plus selon l'une quelconque des revendications précédentes.

10. Produit de caoutchouc renforcé par le câble d'acier selon la revendication 9, ledit produit de caoutchouc étant un pneu, un tuyau, une ceinture ou un quelconque autre article à base de caoutchouc pouvant être renforcé par un câble d'acier.

**11.** Produit de caoutchouc selon la revendication 10, ledit caoutchouc étant sensiblement exempt de cobalt ou de composés contenant du cobalt.

**12.** Procédé de production d'un filament d'acier selon l'une quelconque des revendications ci-dessus comprenant les étapes de :

    a. sélection d'une tige d'enroulement ;
    b. tréfilage à sec de ladite tige d'enroulement en un fil intermédiaire ;
    c. brevetage dudit fil intermédiaire en un fil breveté ;
    d. décapage dudit fil breveté ;
    e. revêtement de manière électrolytique dudit fil breveté par une couche de cuivre ;
    f. revêtement de manière électrolytique dudit fil breveté et revêtu par du cuivre par un revêtement de zinc ;
    g. diffusion desdits revêtement de cuivre et revêtement de zinc sur ledit fil breveté pour former un revêtement de laiton formant ainsi un fil plaqué par du laiton ;
    h. tréfilage humide dudit fil plaqué par du laiton en le filament d'acier ;

**caractérisé en ce que**
ledit fil intermédiaire possède une rugosité circonférentielle $R_a$ qui est plus grande que 0,4 micromètre, dans le tréfilage dudit fil plaqué par du laiton une ou plusieurs matrices comprenant du diamant sont utilisées dans le ou les derniers passages.

**13.** Procédé selon la revendication 12, dans l'étape « d » le décapage étant réalisé dans un acide chlorhydrique, ledit acide chlorhydrique ayant une concentration d'ions fer(III) qui est comprise entre 6 et 15 grammes par litre.

**14.** Procédé selon l'une quelconque des revendications 12 à 13, après l'étape « f » et avant l'étape « g » le fil étant guidé à travers un bain acide contenant des cations fer(II) pour échanger des atomes de zinc par des atomes de fer au niveau de la couche supérieure dudit revêtement de zinc.

**15.** Procédé selon la revendication 14, ledit bain acide étant l'un parmi le groupe constitué par :

    - des solutions de chlorure ferreux ;
    - des solutions de sulfate ferreux ;
    - des solutions de sulfate d'ammonium ferreux ;
    - des solutions de fluoroborate ferreux ;
    - des solutions de sulfamate ferreux ;
    - des bains mixtes de sulfate-chlorure.

FIGURE 1

FIGURE 2

FIGURE 3

FIGURE 4

FIGURE 5

FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4255496 A
- US 4265678 A
- WO 2011076746 A
- WO 2013117248 A
- WO 2013117249 A
- US 4446198 A
- US 4704337 A

### Non-patent literature cited in the description

- Rubber-brass bonding. **W.J. VAN OOIJ.** Handbook of Rubber Bonding. Rapra Technology Limited, 2001, 176
- **W.J. VAN OOIJ.** Mechanism and theories of rubber adhesion to steel tire cords - an overview. *RUBBER CHEMISTRY AND TECHNOLOGY,* 1984, vol. 57, 429, , 421-456
- D12 Determination of static adhesion to rubber compounds. Internationally agreed methods for testing of steel tyre cord. 1995